# EUROPÄISCHE PATENTSCHRIFT

(11) **EP 0 867 028 B1**
(45) Veröffentlichungstag und Bekanntmachung des Hinweises auf die Patenterteilung: **15.03.2000**
(21) Anmeldenummer: 96946168.0
(22) Anmeldetag: 02.12.1996
(51) Int. Cl.: G21F 9/00

(54) **VERFAHREN ZUR VERWERTUNG KONTAMINIERTER METALLTEILE**
PROCESS FOR RECYCLING CONTAMINATED METAL PARTS
PROCEDE DE VALORISATION DE PARTIES METALLIQUES CONTAMINEES

(30) Priorität: 14.12.1995 DE 19546789
(43) Veröffentlichungstag der Anmeldung: 30.09.1998
(73) Patentinhaber: SIEMENS AKTIENGESELLSCHAFT, 80333 München (DE)
(72) Erfinder: HAAS, Ernst, D-91054 Buckenhof (DE); NEUDERT, Nikolaus, D-90518 Altdorf (DE); HOFMANN, Roland, D-90542 Eckental (DE)
(86) Internationale Anmeldenummer: DE9602307
(87) Internationale Veröffentlichungsnummer: WO9722124

(56) Entgegenhaltungen:
- WO-A-96/04663
- FR-A- 2 346 819
- FR-A- 2 479 540
- FR-A- 2 484 126
- FR-A- 2 546 332
- DATABASE WPI Section Ch, Week 8612 Derwent Publications Ltd., London, GB; Class K07, AN 86-078382 XP002029207 & JP 61 026 898 A (HITACHI LTD) , 6.Februar 1986

## Beschreibung

Die Erfindung betrifft ein Verfahren zur Verwertung von Metallteilen, die durch radioaktive Elemente, insbesondere durch α-Strahler, kontaminiert sind, wobei aus den Metallteilen eine Schmelze und eine Schlacke gebildet werden und die Schlacke dann von der Schmelze abgetrennt wird.

Beim Abbau und auch beim Betrieb kerntechnischer Anlagen fällt in großem Umfang kontaminierter, metallischer, insbesondere eisenhaltiger, Schrott an, der verwertet oder beseitigt werden muß. Es ist üblich, diesen Schrott einer Schmelzdekontamination zu unterziehen. Dieser Schrott enthält als radioaktive Elemente z.B. α-Strahler, wie Uran, Thorium, Transurane und/oder Erdalkalimetalle.

Ein Verfahren, das eine Schmelzdekontamination umfaßt, ist aus der DE 33 18 377 A1 bekannt. Dabei wird das kontaminierte Metall aufgeschmolzen und der sich dabei bildenden Schmelze wird ein Verschlackungsmittel zugegeben. Es bildet sich dann eine Schlacke, die auf der Schmelze schwimmt. Radioaktive Elemente (z.B. Uran, Neptunium und Plutonium), die die Kontamination der Metallteile verursacht haben, sammeln sich in der Schlacke an. Während also die Konzentration dieser Elemente in der Schlacke steigt, nimmt ihre Konzentration in der Schmelze ab. Das ist darauf zurückzuführen, daß die Löslichkeit der betreffenden Elemente in der Schlacke größer ist als in der Schmelze. Man erzielt also eine Dekontamination der Schmelze. Die Schlacke wird später von der Oberfläche der Schmelze abgezogen. Ihr Volumen ist klein im Vergleich zum Gesamtvolumen aus Schmelze und Schlacke. Nur dieses kleine Schlackenvolumen muß einem Endlager zugeführt werden. Man benötigt folglich nur eine relativ kleine Endlagerkapazität. Die Metallschmelze, deren Volumen deutlich größer als das Volumen der Schlacke ist, ist dekontaminiert und kann daher weiter verwendet werden. Beispielsweise können Metallformstücke aus dekontaminiertem Metall hergestellt werden.

Obwohl mit der bekannten Schmelzdekontamination die Elemente, die die Kontamination der Metallteile verursacht haben, aus der Metallschmelze weitgehend entfernt werden, ist doch eine weitere Steigerung des Dekontaminationsgrades wünschenswert.

Aus der FR-A-2 479 540 ist ein Verfahren zum Beseitigen radio-aktiver Abfälle bekannt, bei dem Bestandteile dieser Abfälle oxidiert werden.

Der Erfindung liegt die Aufgabe zugrunde, ein Verfahren zur Verwertung von radioaktiv kontaminierten Metallteilen anzugeben, das die Metallschmelze noch weitgehender als bisher von den Elementen befreit, die die radioaktive Kontamination der Metallteile verursacht haben. Es soll also eine größere Menge (Volumen bzw. Masse) der radioaktiven Elemente aus der Schmelze entfernt und in die Schlacke eingebracht werden.

Die Aufgabe wird nach der Erfindung dadurch gelöst, daß zur Oxidation der radioaktiven Elemente die kontaminierten Metallteile in sauerstoffhaltiger Atmosphäre für eine Zeitspanne bei einer Temperatur unterhalb der Schmelztemperatur der Metallteile gehalten werden.

Die Temperatur, bei der die Oxidation erfolgt, muß jedoch möglichst hoch sein, also nur wenig unterhalb der Schmelztemperatur liegen, damit einerseits während der Oxidation noch keine Schmelze entsteht und andererseits eine möglichst vollständige Oxidation möglich ist. Der Oxidationsprozeß läuft nämlich bei höherer Temperatur besser ab.

Dadurch, daß die gesamten kontaminierten Metallteile und nicht ausschließlich nur die radioaktiven Elemente einem Oxidationsprozeß unterzogen werden, wird dieser vorteilhafterweise vereinfacht. Da die radioaktiven Elemente an den Oberflächen der Metallteile anhaften, ist eine vollständige Oxidation dieser Elemente gewährleistet. Daß dabei auch ein relativ kleiner Teil des Metalls, aus dem die Metallteile selbst bestehen, oxidiert wird, stört die anschließende Schmelzdekontamination nicht. Die Oxide der Elemente gehen dann beim Aufschmelzen bevorzugt in die Schlacke.

Mit dem Verfahren nach der Erfindung wird insbesondere der Vorteil erzielt, daß die radioaktiven Elemente, die in der Schlacke gelöst werden sollen, als Oxide vorliegen, deren Löslichkeit überraschenderweise in der Schlacke größer ist als die Löslichkeit der nicht oxidierten Elemente. Folglich wird vorteilhafterweise ein deutlich vergrößerter Anteil der Elemente, welche die Kontamination verursacht haben, aus der Metallschmelze entfernt. Die Metallschmelze und damit auch aus ihr beispielsweise hergestellte Metallformstücke sind dadurch weitgehend dekontaminiert. Die Metallformstücke können dann unbeschränkt verwendet werden.

Die sauerstoffhaltige Atmosphäre kann beispielsweise trockene oder feuchte Luft sein. Es braucht dann vorteilhafterweise keine besondere sauerstoffhaltige Atmosphäre bereitgestellt werden.

Die Zeitspanne, für die die Metallteile zur Oxidation in der sauerstoffhaltigen Atmosphäre bei einer Temperatur unterhalb der Schmelztemperatur der Metallteile gehalten werden, kann beispielsweise 10 Minuten bis 60 Minuten lang sein. In einem solchen Zeitraum ist eine ausreichend vollständige Oxidation der radioaktiven Elemente gewährleistet.

Die zu dekontaminierenden Metallteile können beispielsweise Eisen und/oder Kupfer enthalten.

Mit dem Verfahren nach der Erfindung wird der Vorteil erzielt, daß mit einer Schmelzdekontamination ein deutlich verbesserter Dekontaminationsgrad von Metallteilen erzielt wird. Die aus der dekontaminierten Metallschmelze erzeugten Metallformstücke können dann uneingeschränkt verwendet werden.

## Patentansprüche

1. Verfahren zur Verwertung von Metallteilen, die durch radioaktive Elemente insbesondere durch α-Strahler, kontaminiert sind, wobei aus den Metallteilen eine Schmelze und eine Schlacke gebildet werden und die Schlacke dann von der Schmelze abgetrennt wird,
**dadurch gekennzeichnet**, daß vor der Bildung der Schmelze und der Schlacke die radioaktiven Elemente oxidiert werden, und daß zur Oxidation der radioaktiven Elemente die kontaminierten Metallteile in sauerstoffhaltiger Atmosphäre für eine Zeitspanne bei einer Temperatur unterhalb der Schmelztemperatur der Metallteile gehalten werden.

2. Verfahren nach Anspruch 1,
**dadurch gekennzeichnet**, daß die sauerstoffhaltige Atmosphäre trockene oder feuchte Luft ist.

3. Verfahren nach einem der Ansprüche 1 oder 2,
**dadurch gekennzeichnet**, daß die Zeitspanne 10 Minuten bis 60 Minuten lang ist.

## Claims

1. Method for recycling metal parts which are contaminated by radioactive elements, in particular by α-emitters, a melt and a slag being formed from the metal parts and the slag then being separated from the melt, characterised in that the radioactive elements are oxidized prior to the formation of the melt and the slag, and in that for the purpose of oxidizing the radioactive elements, the contaminated metal parts are held in an oxygen-containing atmosphere for a period at a temperature below the melting temperature of the metal parts.

2. Method according to Claim 1, characterized in that the oxygen-containing atmosphere is dry or moist air.

3. Method according to one of Claims 1 and 2, characterized in that the period is 10 minutes to 60 minutes long.

## Revendications

1. Procédé de valorisation de parties métalliques contaminées par des éléments radioactifs, notamment des émetteurs de rayonnement α, une masse fondue et un laitier étant formés à partir des parties métalliques et le laitier étant ensuite séparé de la masse fondue, caractérisé en ce que les éléments radioactifs sont oxydés avant la formation de la masse fondue et du laitier et en ce que, pour oxyder les éléments radioactifs, on maintient les parties métalliques contaminées dans une atmosphère contenant de l'oxygène pendant un intervalle de temps, à une température inférieure à la température de fusion des parties métalliques.

2. Procédé selon la revendication 1, caractérisé en ce que l'atmosphère contenant de l'oxygène est de l'air sec ou humide.

3. Procédé selon l'une des revendications 1 ou 2, caractérisé en ce que l'intervalle de temps va de 10 minutes à 60 minutes.
